# EUROPÄISCHE PATENTANMELDUNG

(11) **EP 1 249 656 A2**
(43) Veröffentlichungstag der Anmeldung: **16.10.2002**
(21) Anmeldenummer: 02090138.5
(22) Anmeldetag: 09.04.2002
(51) Int. Cl.: F16L 13/16

(54) **Rohrverbindung**

(30) Priorität: 10.04.2001 DE 10118956
(71) Anmelder: Mapress GmbH & Co. KG, 40764 Langenfeld (DE)
(72) Erfinder: Speckemeyer, Jens, 45475 Mülheim (DE)
(74) Vertreter: Meissner, Peter E., Dipl.-Ing.

(57) **Zusammenfassung**

Die Erfindung betrifft eine Rohrverbindung, bestehend aus einem metallischen Preßfitting, der mindestens einen im Querschnitt wulstartig ausgebildeten, ein Dichtelement aufnehmenden Abschnitt und einen daran anschließenden, der Einschubseite zugewandten und/ oder der Einschubseite abgewandten, zylindrisch ausgebildeten Abschnitt aufweist, wobei der der Einschubseite abgewandte zylindrisch ausgebildete Abschnitt einen sich nach innen erstreckenden Absatz aufweisend in einen daran anschließenden zylindrisch ausgebildeten Abschnitt übergeht, dessen Innendurchmesser kleiner ist als die anderen zylindrisch ausgebildeten Abschnitte und einem metallischen Leitungsrohr, dessen glatt ausgebildeter Endbereich nach dem Einschub in den Preßfitting am Absatz des ersten zylindrisch ausgebildeten Abschnittes des Preßfittings zur Anlage kommt. Dabei ist im montierten, aber nicht verpressten Zustand der Dichtbereich mit einer Vielzahl von kleinen hervorstehenden Noppen (14) versehen und die Zwischenräume zwischen den Noppen (14) bilden eine Vielzahl von miteinander verbundenen Kanälen (15), die nach dem Verpressen abdichtend verschlossen sind.

## Beschreibung

Die Erfindung betrifft eine Rohrverbindung bestehend aus einem metallischen Preßfitting und Leitungsrohr sowie einem Dichtelement gemäß dem Oberbegriff des Patentanspruches 1.

Eine Rohrverbindung der gattungsgemäßen Art ist bekannt (s. Prospekt Mannesmann Preßfitting GmbH, Ausgabe 8/1994). Die Dichtfunktion der Verbindung wird dadurch erreicht, dass durch plastische Verformung des wulstartig ausgebildeten Endes des Preßfittings der Dichtring elastisch verformt wird und über einen bestimmten Teil des Querschnittumfanges linienförmig an den ihn umgebenden Oberflächenbereichen des wulstartig ausgebildeten Endes des Fittings und des Rohres zur Anlage kommen. Zur Aufnahme der bei entsprechendem Innendruck auftretenden Längskräfte wird der dem wulstförmig ausgebildeten Ende benachbarte zylindrische Bereich des Fittings zusammen mit dem Rohr plastisch verformt. Bei der Verpressung werden sowohl das wulstförmig ausgebildete Ende als auch der benachbarte zylindrische Bereich mittels der Betätigungsvorrichtung gleichzeitig verformt.

Im Regelfall führt bei der nach der Installation vorgeschriebenen Druckprobe eine nicht verpresste Verbindungsstelle zu einer feststellbaren Leckage. In Sonderfällen kann es aber vorkommen, dass die Toleranzpaarung von Rohr, Fitting und Dichtelement so ausfällt, dass das Dichtelement schon beim Einschieben des glattendigen Rohres eine, wenn auch nur geringe Verformung erfährt, die aber ausreicht, um der Druckprobe bei der Abnahme der Installation standzuhalten.

Im späteren Betrieb atmet aber die Leitung, d.h. schnell schaltende Ventile führen zu Druckstößen, es kann je nach Erwärmung zu Relativbewegungen kommen, so dass bei fehlender axialer Sicherung infolge der Nichtverpressung die sich zuvor ergebende geringe Vorverformung des Dichtelementes nicht ausreicht, um die Dichtheit der Verbindungsstelle weiterhin zu gewährleisten.

Aufgabe der Erfindung ist es, eine Rohrverbindung der gattungsmäßigen Art anzugeben, mit der auch bei ungünstiger Toleranzpaarung von Rohr, Fitting und Dichtelement eine nicht verpresste Stelle als undicht detektiert wird.

Diese Aufgabe wird ausgehend vom Oberbegriff des Patentanspruches 1 mit den im kennzeichnenden Teil angegebenen Merkmalen gelöst. Vorteilhafte Weiterbildungen sind jeweils Gegenstand von Unteransprüchen.

Nach der Lehre der Erfindung ist im montierten, aber nicht verpressten Zustand der Dichtbereich mit einer Vielzahl von kleinen hervorstehenden Noppen versehen, wobei die Zwischenräume zwischen den Noppen eine Vielzahl von miteinander verbundenen Kanälen bilden, die nach dem Verpressen abdichtend verschlossen sind.

Bei einer ersten Ausführungsform ist die äußere Mantelfläche des Dichtelementes mit Noppen versehen, während bei einer zweiten Ausführungsform die Innenwandung des Ringwulstes mit Noppen versehen ist.

Die vorgeschlagene Noppenanordnung ist eine einfache und elegante Lösung, um gezielt im montierten Zustand eine Leckagestelle zu erzeugen, so dass bei Nichtverpressung dieser Rohrverbindungsstelle die Druckprobe negativ ausfällt.

Eine solche nicht verpresste Stelle kann ohne Probleme nachverpresst und die Druckprobe wiederholt werden.

Nach einem weiteren Merkmal der Erfindung ist zusätzlich zur Innenwandung der Ringwulst die Innenfläche des der Einschubseite abgewandten zylindrisch ausgebildeten Abschnitts mit Noppen versehen. Beim Verpressen werden die Noppen zerquetscht und füllen teilweise oder ganz den Spalt zwischen Außenfläche Leitungsrohr und Innenfläche Preßfitting aus. Diese Spaltfüllung ist vorteilhaft zur Vermeidung einer Spaltkorrosion in diesem Bereich.

Dieser Versiegelungsgedanke ist auch für die Kontaktfläche zwischen Dichtelement.und Innenwandung Ringwulst zutreffend und kann vorteilhaft genutzt werden.

Die Noppen werden durch eine Beschichtung des Dichtelementes oder des Preßfittings mit unterschiedlichen leicht verformbaren Materialien erzeugt. Beispielsweise kann dies Talkum, Klebstoff oder Silikonöl sein. Um das aufgetragene Material noppenartig zu vereinzeln, wird es vorzugsweise mikroverkapselt.

Weitere Merkmale, Vorteile und Einzelheiten der Erfindung ergeben sich aus der nachfolgenden Beschreibung von in einer Zeichnung dargestellten Ausführungsbeispielen. Es zeigen:
- Figur 1: einen hälftigen Längsschnitt einer erfindungsgemäß ausgebildeten Rohrverbindung im montierten, aber nicht verpressten Zustand.
- Figur 2: in einer perspektivischen Darstellung einen Teilabschnitt eines erfindungsgemäß ausgebildeten Dichtelementes.
- Figur 3: wie Figur 1 aber nach der Verpressung.
- Figur 4: wie Figur 1 aber mit einem beschichteten Preßfitting.
- Figur 5: wie Figur 4 aber nach der Verpressung.

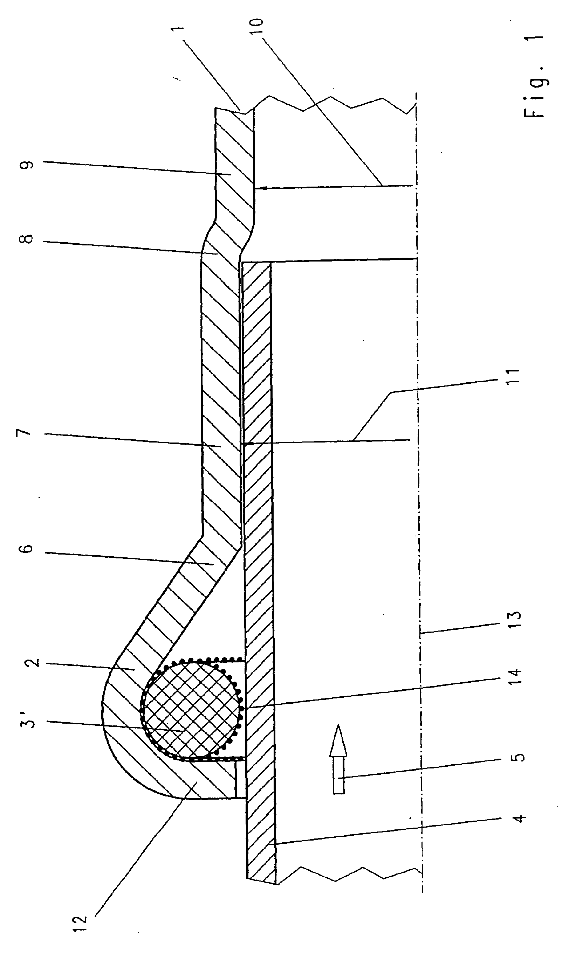

Figur 1 zeigt in einem Längsschnitt eine erfindungsgemäß ausgebildete Rohrverbindung im montierten Zustand vor der Verpressung. Die hier dargestellte Rohrverbindung besteht aus einem Preßfitting 1, dessen stimseitiges Ende eine Ringwulst 2 mit einem darin einlegbaren Dichtelement 3' aufweist. Überlicherweise ist das Dichtelement 3' als Rundschnurring ausgebildet, dessen Mantelfläche erfindungsgemäß mit Noppen 14 versehen ist. In den Preßfitting 1 eingeschoben ist ein glattendiges Leitungsrohr 4, dessen Einschubrichtung 5 durch einen Pfeil gekennzeichnet ist. In Einschubrichtung 5 schließt sich an die Ringwulst 2 mit einem schrägen Übergang 6 ein zylindrisch ausgebildeter Abschnitt 7 an. Dieser geht mit einem Absatz 8 über in einen zweiten zylindrisch ausgebildeten Abschnitt 9, dessen Innendurchmesser 10 geringer ist als der Innendurchmesser 11 des ersten zylindrischen Abschnittes 9. Am Absatz 8 kommt auf der Innenseite das eingeschobenen Leitungsrohr 4 zur Anlage. Entgegengesetzt zur Einschubrichtung 5 geht in diesem Ausführungsbeispiel die Ringwulst 2 über in einen stirnseitigen Bereich 12, dessen Schenkel nahezu senkrecht liegt zur Achse 13 des Leitungsrohres 4.

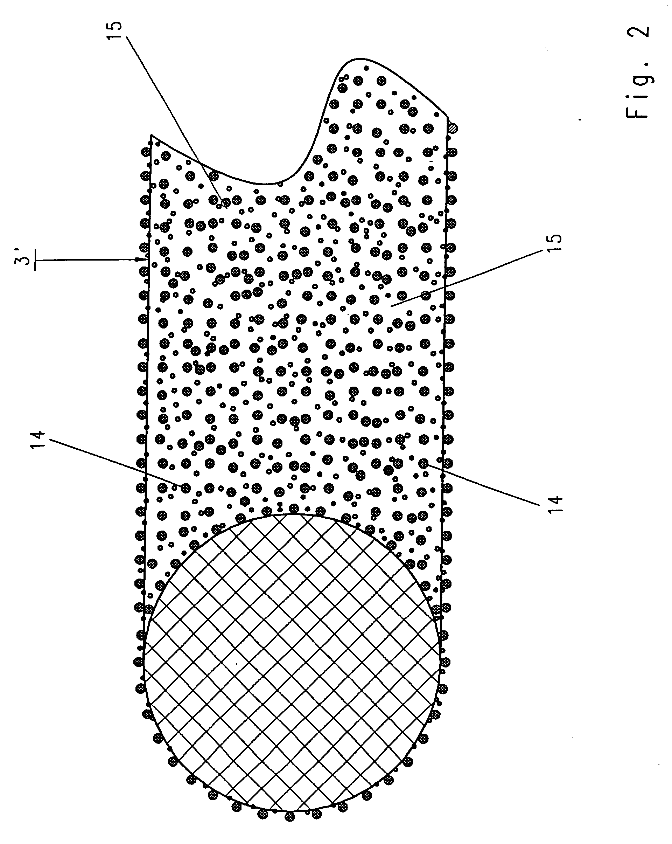

Figur 2 zeigt in einer perspektivischen Darstellung einen Teilabschnitt des erfindungsgemäß ausgebildeten Dichtelementes 3. Deutlicher als in Figur 1 kann man die Anordnung einer Vielzahl von Noppen 14 erkennen, die auf der äußeren Mantelfläche des Dichtelementes 3 unregelmäßig verteilt sind. Durch die unregelmäßige Anordnung der Noppen 14 werden Zwischenräume gebildet, die miteinander verbundene Kanäle 15 für das abzudichtende Medium bilden.

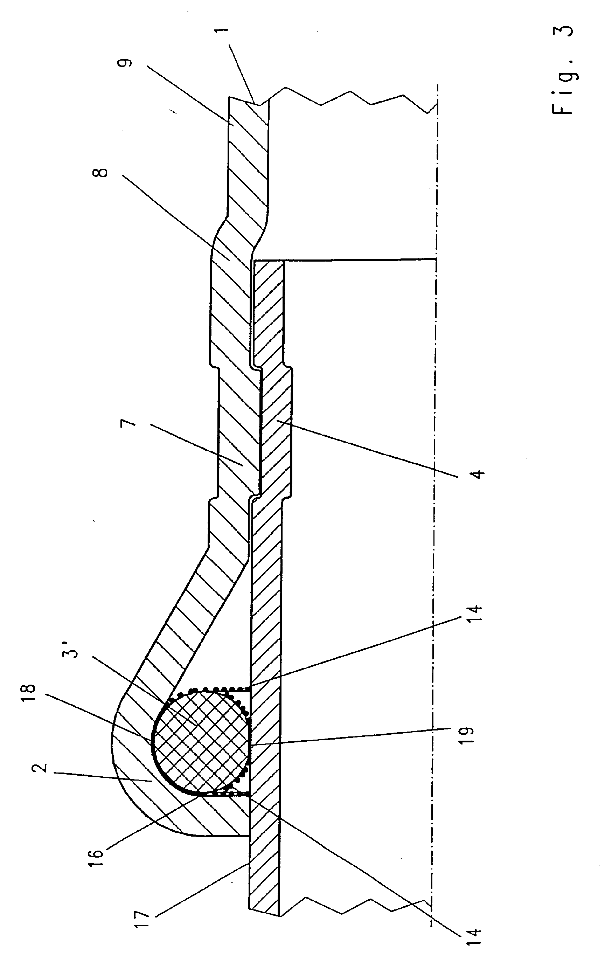

Die Situation nach der Verpressung zeigt Figur 3. Durch das im wesentlichen radiale Zusammendrücken der Ringwulst 2 wird auch das darin eingelegte Dichtelement 3' elastisch mitverformt. Man kann die Verformung des Dichtelementes 3' an der Eiform im Unterschied zum runden Querschnitt gemäß Figur 1 erkennen. Die auf der Mantelfläche des Dichtelementes 3' angeordneten Noppen 14 werden aus einem weichen nachgiebigen Material gebildet, so dass bei der Verpressung das Material der Noppen vergleichbar wie ein Überzug sich partiell über die Mantelfläche ausbreitet. Dieser Ausbreitungseffekt erfolgt nicht auf der gesamten Mantelfläche, sondern nur in dem Bereich, wo das Dichtelement 3' entweder die Innenwandung 16 der Ringwulst 2 oder die Außenfläche 17 des Leitungsrohres 4 kontaktiert. An den nicht kontaktierten Stellen bleiben die Noppen 14 bestehen. Die sich bei der Verpressung bildenden Überzugsabschnitte 18, 19 können als Trennschicht im Sinne der Vermeidung eines Korrosionsangriffes genutzt werden.

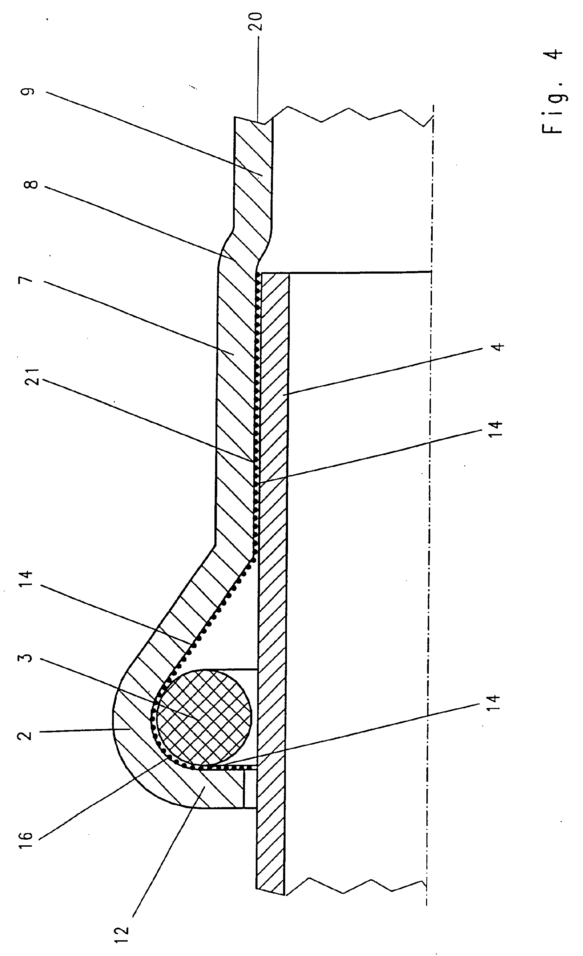

Figur 4 zeigt eine zweite Ausführungsform des erfindungsgemäßen Gedankens, wobei für gleiche Teile gleiche Bezugszeichen verwendet worden sind. In diesem Ausführungsbeispiel ist die Innenseite des Preßfittings 20 mit Noppen 14 versehen. Diese Anordnung kann sich nach einer ersten Ausgestaltung auf den Bereich der Innenwandung 16 der Ringwulst 2 beschränken. Vorteilhafterweise wird auch die Innenseite 21 des zylindrisch ausgebildeten Abschnittes 7 mit Noppen 14 versehen. Auch für diese Anordnung wird eine erzwungene Leckage dadurch erzeugt, dass durch die Kanäle zwischen den Noppen 14 das Medium bei Nichtverpressung hindurchströmen kann.

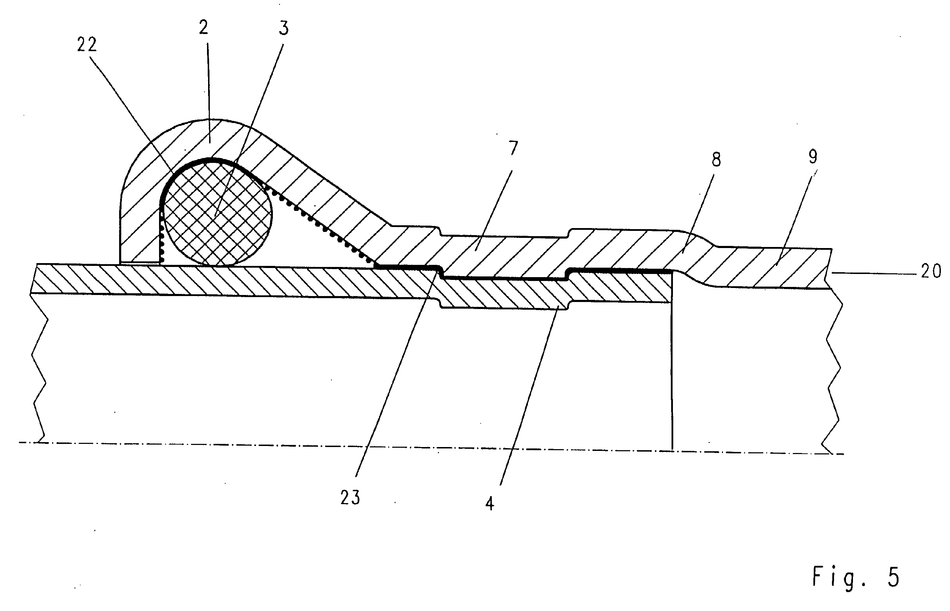

Figur 5 zeigt das Ausführungsbeispiel von Figur 4 nach der Verpressung. Vergleichbar wie schon in Figur 3 erläutert, werden durch die Verpressung quasi Übergangsabschnitte 22, 23 gebildet, die als Trennschicht genutzt werden können. Insbesondere der im zylindrisch ausgebildeten Abschnitt 7 liegende Übergangsabschnitt 23 wird dazu genutzt, damit in den Spalt zwischen Leitungsrohr 4 und zylindrischem Abschnitt 7 des Preßfittings 20 kein korrosionsförderndes Medium eindringen kann.

### Bezugszeichenliste

| **Nr.** | **Bezeichnung** |
|---|---|
| 1 | Preßfitting |
| 2 | Ringwulst |
| 3, 3' | Dichtelement |
| 4 | Leitungsrohr |
| 5 | Einschubrichtung |
| 6 | schräger Übergang |
| 7 | erster zylindrisch ausgebildeter Abschnitt |
| 8 | Absatz |
| 9 | zweiter zylindrisch ausgebildeter Abschnitt |
| 10 | Innendurchmesser zweiter Abschnitt |
| 11 | Innendurchmesser erster Abschnitt |
| 12 | stirnseitiger Bereich |
| 13 | Achse Leitungsrohr |
| 14 | Noppe |
| 15 | Kanal |
| 16 | Innenwandung Ringwulst |
| 17 | Außenfläche Leitungsrohr |
| 18, 19, 22, 23 | Überzugsabschnitt |
| 20 | Preßftting |
| 21 | Innenseite erster Abschnitt |
| | |

## Patentansprüche

1. Rohrverbindung, bestehend aus einem metallischen Preßfitting, der mindestens einen im Querschnitt wulstartig ausgebildeten, ein Dichtelement aufnehmenden Abschnitt und einen daran anschließenden, der Einschubseite zugewandten und/oder der Einschubseite abgewandten, zylindrisch ausgebildeten Abschnitt aufweist, wobei der der Einschubseite abgewandte zylindrisch ausgebildete Abschnitt einen sich nach innen erstreckenden Absatz aufweisend in einen daran anschließenden zylindrisch ausgebildeten Abschnitt übergeht, dessen Innendurchmesser kleiner ist als die anderen zylindrisch ausgebildeten Abschnitte und einem metallischen Leitungsrohr, dessen glatt ausgebildeter Endbereich nach dem Einschub in den Preßfitting am Absatz des ersten zylindrisch ausgebildeten Abschnittes des Preßfittings zur Anlage kommt, um mittels eines den Preßfitting umfassenden mindestens zwei Pressbacken aufweisenden Presswerkzeuges eine unlösbare dichte Rohrverbindung gebildet wird, wobei während des Verpressens die Pressbacken sowohl auf die Ringwulst einschl. des darin eingelegten Dichtelementes als auch auf den der Einschubseite zugewandten und/oder abgewandten zylindrisch ausgebildeten Abschnittes des Preßfittings einwirken,
**dadurch gekennzeichnet,**
**dass** im montierten, aber nicht verpressten Zustand der Dichtbereich mit einer Vielzahl von kleinen hervorstehenden Noppen (14) versehen ist und die Zwischenräume zwischen den Noppen (14) eine Vielzahl von miteinander verbundenen Kanälen (15) bilden, die nach dem Verpressen abdichtend verschlossen sind.

2. Rohrverbindung nach Anspruch 1,
**dadurch gekennzeichnet,**
**dass** die äußere Mantelfläche des Dichtelementes (3') mit Noppen (14) versehen ist.

3. Rohrverbindung nach Anspruch 1,
**dadurch gekennzeichnet,**
**dass** die Innenwandung (16) der Ringwulst (2) mit Noppen (14) versehen ist.

4. Rohrverbindung nach Anspruch 3,
**dadurch gekennzeichnet,**
**dass** auch die Innenfläche (21) des der Einschubseite abgewandten zylindrisch ausgebildeten Abschnittes (7) mit Noppen (14) versehen ist.

5. Rohrverbindung nach einem der Ansprüche 1 - 4,
**dadurch gekennzeichnet,**
**dass** die Noppen (14) durch Beschichtung des Dichtelementes (3') oder des Preßfittings (20) mit unterschiedlich leicht verformbaren Materialien gebildet werden.

6. Rohrverbindung nach Anspruch 5,
**dadurch gekennzeichnet,**
**dass** die Noppen (14) aus Talkum bestehen.

7. Rohrverbindung nach Anspruch 5,
**dadurch gekennzeichnet,**
**dass** die Noppen (14) aus Klebstoff bestehen.

8. Rohrverbindung nach Anspruch 5,
**dadurch gekennzeichnet,**
**dass** die Noppen (14) aus Silikonöl bestehen.

9. Rohrverbindung nach einem der Ansprüche 1 - 8,
**dadurch gekennzeichnet,**
**dass** die aufgetragenen Materialien mikroverkapselt sind.
